(19)

**Europäisches Patentamt**
**European Patent Office**
**Office européen des brevets**

(11) **EP 4 701 188 A1**

(12) **EUROPEAN PATENT APPLICATION**

(43) Date of publication:
**25.02.2026 Bulletin 2026/09**

(21) Application number: **24306385.6**

(22) Date of filing: **22.08.2024**

(51) International Patent Classification (IPC):
**H04N 19/503** (2014.01)    **H04N 19/91** (2014.01)
**G06N 3/045** (2023.01)

(52) Cooperative Patent Classification (CPC):
**H04N 19/503; G06N 3/045; H04N 19/91**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **SCHNITZLER, Francois**
  **56890 SAINT AVE (FR)**

• **EL IDRISSI, Taha**
  **35700 RENNES (FR)**
• **LAMBERT, Anne**
  **35250 SAINT-AUBIN-D'AUBIGNE (FR)**
• **DAMODARAN, Bharath Bhushan**
  **56000 VANNES (FR)**
• **LE MEUR, Olivier**
  **35160 TALENSAC (FR)**

(74) Representative: **Interdigital**
**Immeuble ZEN 2**
**845 A, avenue des Champs Blancs**
**35510 Cesson-Sévigné (FR)**

(54) **WARPED TEMPORAL CONTEXT FOR FEATURE-BASED TEMPORAL INR**

(57)     A method for encoding an input signal is provided, wherein a current latent representative of features of a current frame of the input signal is obtained, at least one reconstructed part of a reference latent representative of features of a reference frame of the input signal is warped to the current frame, a temporal context is determined for at least of one value of the current latent from the warped at least one reconstructed part of the reference latent, and the at least one value of the current latent is entropy encoded based at least on the temporal context. The input signal can be time-varying signal, such as a video, dynamic 3D object or 3D scene.

FIG. 10

## Description

### BACKGROUND

The present embodiments generally relate to image, video and/or 3D scene compression using Feature-based Implicit Neural Representation (INR).

To achieve high compression efficiency, image and video coding schemes usually employ prediction and transform to leverage spatial and temporal redundancy in the video content. Emerging technology makes use of neural networks. Among them, Implicit Neural Representation (INR) aims at parameterizing a function which takes coordinates as inputs and outputs values of a signal at these coordinates. INR can be used for instance for compressing image, videos, 3D objects or haptic texture. Furthermore, these approaches have a far lower computational complexity than end-to-end neural compression approaches.

### BRIEF SUMMARY

Briefly stated, in one embodiment, a method for encoding an input signal is provided, wherein a current latent representative of features of a current frame of the input signal is obtained, at least one reconstructed part of a reference latent representative of features of a reference frame of the input signal is warped to the current frame, a temporal context is determined for at least of one value of the current latent from the warped at least one reconstructed part of the reference latent, and the at least one value of the current latent is entropy encoded based at least on the temporal context.

The input signal can be time-varying signal, such as a video, dynamic 3D object or 3D scene. In another embodiment, a method for reconstructing the signal is provided, wherein at least one part of a warped reference latent is obtained from at least one part of at least one previously reconstructed latent representative of features of a previously reconstructed frame of the signal to reconstruct, by warping to a current frame of the signal, the at least one part of the at least one previously reconstructed latent, a temporal context is determined for at least of one value of a current latent representative of features of the current frame from the at least one part of the warped reference latent, and the at least one value of the current latent is entropy decoded based at least on the temporal context.

In another embodiment, an apparatus is provided that comprises one or more processors operable to perform any one of the methods mentioned above.

One or more embodiments also provide a computer program comprising instructions which when executed by one or more processors cause the one or more processors to perform any of the methods mentioned above. One or more of the present embodiments also provide a non-transitory computer readable medium and/or a computer readable storage medium having stored thereon instructions for performing any of the methods mentioned above. One or more embodiments also provide a computer readable storage medium having stored thereon a bitstream generated according to the methods described herein. One or more embodiments also provide a method and apparatus for transmitting or receiving the bitstream generated according to the methods described above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure.
FIG. 2 illustrates an example of a neural network for Implicit Neural Representation (INR).
FIG. 3 illustrates an example of a method for encoding a signal using an INR.
FIG. 4 illustrates an example of a neural architecture for hybrid-INR.
FIG. 5 illustrates an example of a method for entropy encoding latent values using spatio-temporal context.
FIG. 6 illustrates an example of a method for encoding a video frame using a COOL CHIC architecture.
FIG. 7 illustrates an example of a method for obtaining a warped temporal context according to an embodiment.
FIG. 8 illustrates an example of a method for entropy encoding latent values using spatial context and warped temporal context, according to an embodiment.
FIG. 9 illustrates an example of a method for obtaining a warped temporal context according to another embodiment.
FIG. 10 illustrates an example of a method for encoding an input signal according to an embodiment.
FIG. 11 illustrates an example of a method for decoding/reconstructing a signal from a bitstream according to an embodiment.

FIG. 12 shows two remote devices communicating over a communication network in accordance with an example of the present principles.

FIG. 13 shows the syntax of a signal in accordance with an example of the present principles.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

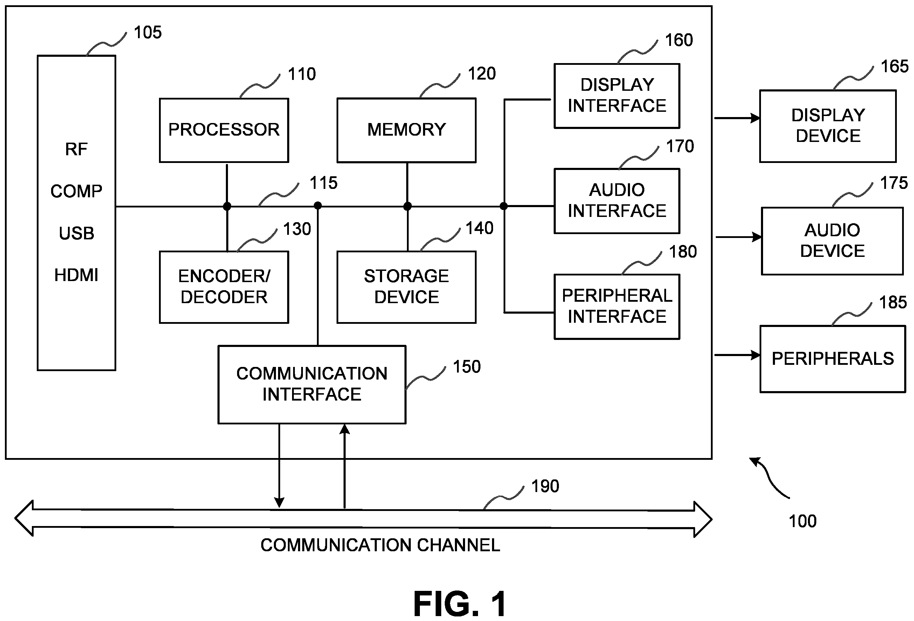

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

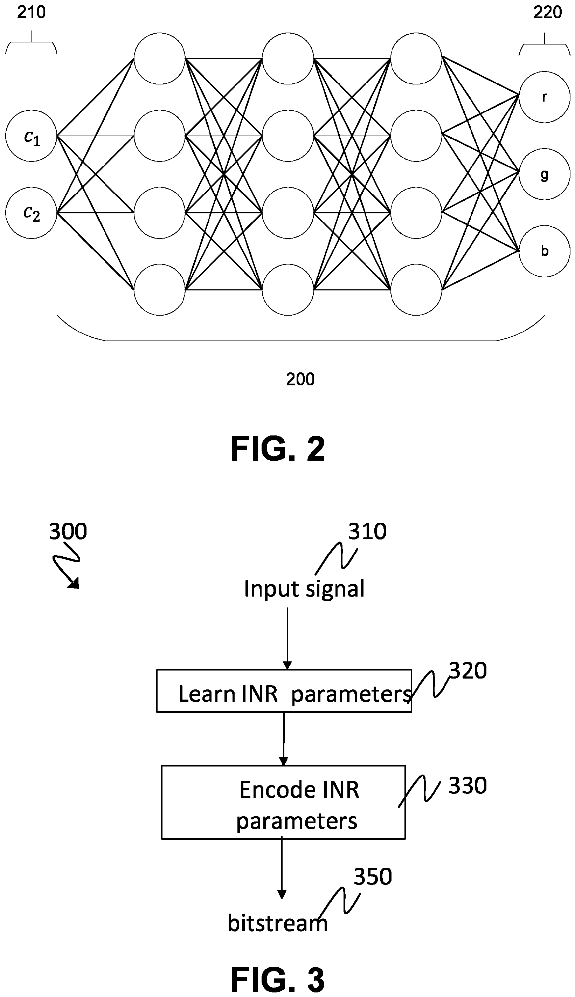

FIG. 2 illustrates an example of a neural network that can be used for implicit neural representation (INR). Such a neural network used for INR can be referred to as an INR network. The INR network is also referred as Coordinates Neural Representation. The INR network allows to obtain a compact representation of an input signal, an image for example. The INR network models the input signal by an overfitted Multi Layer Perceptron (MLP), performing, in the case of an image for example, the mapping from pixel coordinates to its RGB values.

The INR parameterizes a signal as a function 200, which takes coordinates 210 as input and outputs values 220 of a signal at these coordinates. INR has recently been applied to image, videos or 3D objects among other applications. In the image case, the inputs 210 can be pixel coordinates $(c_1, c_2)$ and the INR may output 220 the color values $(r, g, b)$ or $(y, u, v)$ of the input pixel. The input coordinates may be modified by a transformation before being used as input for the neural network. This transformation can be a Fourier mapping, coordinate transformation, normalization etc.

The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network 200 is typically a neural network, composed of multiple neural layers, such as fully connected layers. For example, in FIG. 2, the network has four layers. Intermediate outputs are represented by circles. Each neural layer can be described as a function that first multiplies the input by a tensor, adds a vector called the bias and then applies a nonlinear function on the resulting values. The shape (and other characteristics) of the tensor and the type of non-linear functions are called the architecture of the network. The values of the tensor and the bias are denoted by the term "weights". The weights and, if applicable, the parameters of the non-linear functions, are called the parameters $\theta$ of the network. The architecture and the parameters define a "model". We will use $f_\theta$ to denote an INR function parameterized by $\theta$.

FIG. 3 illustrates an example of a method 300 to encode a signal 310 using an INR. This is done by optimizing 320 the parameters $\theta$ (or a subset of them) of the INR network to reconstruct the signal and optionally encoding 330 them to create the output bitstream 350. For an image x of size $(M \times N)$, the parameters $\theta$ can for example be optimized by minimizing the following loss function:

$$\mathrm{Loss} = \mathrm{D}(x, f_{\boldsymbol{\theta}}) + \lambda R(\theta)$$

$$D_{MSE} = \frac{1}{MN} \sum_{c_1,c_2} \big(x(c_1,c_2) - f_\theta(c_1,c_2)\big)^2 \quad,$$

where D is a distortion which quantifies the difference between the reconstructed image by $f_\theta$ to the original image x, R is the bitrate of the encoded parameters and $\lambda$ a trade-off parameter between D and R. D could be any differentiable distortion measure, such as mean squared error as in the second equation. M and N are the width and height of the original image. Other metrics such as LPIPS (learned perceptual image patch similarity) can also be used in this case. The optimization of the parameters $\theta$ is typically performed by a machine learning approach such as a batch gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs $(c_1, c_2)$ for all $c_1 \in 0,1, ...,255$ and $c_2 \in 0,1, ...,255$. Other choices are possible, for example to upsample, downsample or extend the original image.

The bitstream encoding a signal is thus created by encoding the parameters of the neural network. This can be done by a neural compression codec such as Neural Network Coding (NNC)/ ISO/IEC 15938-17 or MPEG-7 part 17 or by quantizing the parameters and/or pruning some neurons from the network.

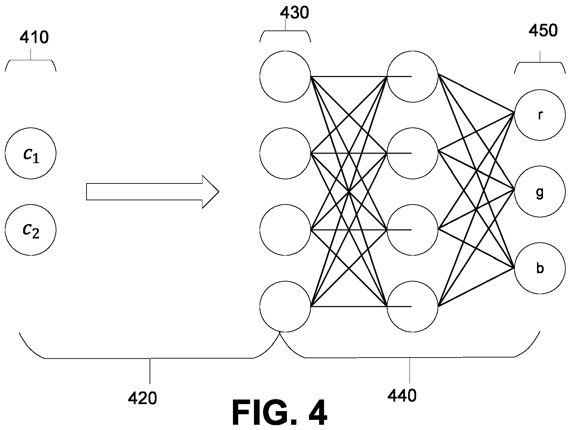

FIG. 4 illustrates an example of a neural architecture that is an INR variant, called in the following Hybrid INR. The input coordinates 410 are first mapped to a vector of latent features 430. Such a mapping 420 can for example rely on a lookup table, a partition of the input signal, a hash function and/or a linear combination of features. Multiple mappings may also be done, the associated features are then concatenated. It may also involve interpolation between neighboring vectors of features, for input coordinates that are not directly associated to a vector of features. These features may also be upsampled if needed. A vector of features is obtained by these mappings for given coordinates 410 and used as input for an INR synthesis network 440 that outputs the value 450 of the signal for the input coordinates 410. Using such an architecture rather than a plain INR network helps to handle local features of the input signal. Indeed, the features for a given location can be completely or mostly independent from features at other coordinates and thus can be tailored to each location. Encoding a signal using a hybrid-INR is similar to traditional INR: both the network parameters (440) and the features (430) are optimized/learned by minimizing a loss as described above.

An example of a hybrid-INR architecture, called COOL-CHIC, for image coding can be found in Ladune T, Philippe P, Henry F, et al. (2023) Cool-chic: Coordinate-based low complexity hierarchical image codec. Proceedings of the IEEE/CVF International Conference on Computer Vision 13515-13522 and an extension of the COOL-CHIC system for video coding is described in Leguay T, Ladune T, Philippe P, Déforges O (2024) Cool-chic video: Learned video coding with 800 parameters. In: 2024 Data Compression Conference (DCC). IEEE, pp 23-32.

An example of a multiresolution hash encoding (called Instant-NGP) can be found in "T. Müller, A. Evans, C. Schied, A. Keller, Instant Neural Graphics Primitives with a Multiresolution Hash Encoding, ACM Trans. Graph. Vol 41, N°4, July 2022" which complements a fully connected neural network with a latent representation of the image. In Instant NGP, the latent representation of the image describes different spatial locations with different latent parameters. The latent representation is arranged into multiresolution levels, each level being independent and storing features vectors at the vertices of a grid. To reconstruct an image for example, the fully connected neural network takes as input a features vector obtained for a given input coordinate of the image, the features vector being a concatenation of results obtained for each level using hash tables and linear interpolation and auxiliary inputs and proves RGB values for the input coordinates.

In hybrid INR approaches, the latent features y are typically the largest contributor to the bitstream size, several orders of magnitude larger than the one associated to the MLP parameters, except for small bitstream lengths. One solution to reduce the transmission cost of the latent features relies on quantization and entropy coding.

The attention given to the entropy coding of the latent features y appears on the new formulation of the loss function:

$$\min_{\hat{y},\theta,\psi} D\left(x, f_\theta\big(\text{upsample}(\hat{y})\big)\right) - \lambda \log_2 p_\psi(\hat{y}), \qquad (1)$$

where $\hat{y}$ is the quantized latent features and $p_\psi(\hat{y})$ is the discrete distribution over the quantized latent features. The distribution of the latent features y can for example be a known distribution or estimated using an auto regressive probability model.

According to Equation (1), minimizing the rate associated to the transmission of the compressed version of the frame relies on minimizing the rate associated to the latent features.

This can be achieved either by:

• Reducing the amount of information contained in the latent features risking a poor reconstruction of the sent frame and an increase of distortion in $\hat{x}=f_\theta(\text{upsample}(\hat{y}))$. (less information in $\hat{y}$ -> more distortion in $\hat{x}$).

• Or we can try to estimate the distribution of the sent latent as close as possible to the real (unknown) one using a well-chosen probability model. If that probability model is trained, it must be included in the bitstream.

Due to its high dimension the modeling of the joint distribution of $\hat{y}$ is usually untrackable.

Instead it is typical to factorize $p_\psi(\hat{y})$ and use a set of C context latents $c_{ijk}^s$ such that the distribution of each quantized latent $\widehat{y_{ijk}}$ is conditioned on C spatially neighboring latents that have already been decoded and selected in a way to introduce as little sequentiality as possible to allow parallel decoding of the L channels, for example in a wavefront-like approach. The position of the latent considered must be known by the emitter and the receiver. The factorization of $p_\psi(\hat{y})$ is given by:

$$p_\psi(\hat{y}) = \prod_{i,j,k} p_\psi\left(\widehat{y_{ijk}}\middle|c_{ijk}^s\right),$$

Where $p_\psi\left(\widehat{y_{ijk}}\middle|c_{ijk}^s\right)$ denotes the conditional probability of one latent value at position (i,j,k) conditioned on its spatial context $c_{ijk}^s$. (i, j) represents the spatial coordinate and k represents a latent feature.

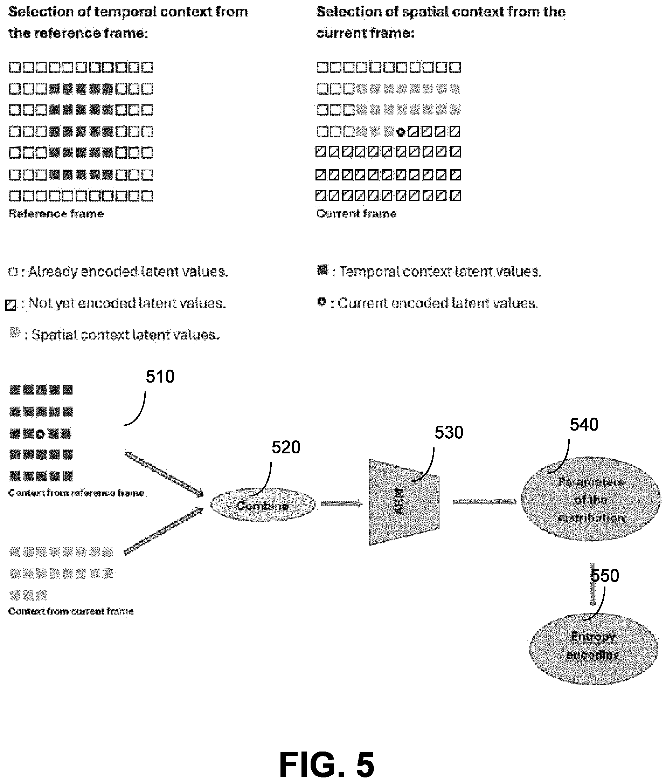

FIG. 5 shows an example introducing temporal information in the context by combining the spatial context latents used from the current frame, and others context latents selected from the already encoded/decoded reference frame(s), leading to a better bitrate/distortion trade-off. In FIG. 5, for encoding or decoding a current latent value, at 510, spatial context and temporal context latent values are obtained for the current latent value. Spatial context values are obtained from a causal region neighboring the current latent value in the current frame, and temporal context values is selected as latent values reconstructed for the reference frame in a co-located region with the location of the current latent value to encode or decode. Spatial and temporal context values are combined at 520 and provided at 530 to the probability model estimator (ARM) which outputs at 540 a probability value for the current latent value to encode or decode. At 550, the current latent value is encoded or decoded using the obtained probability value.

In the case of FIG. 5, the probability distribution over the latent features factorizes as follows:

$$p_\psi(\hat{y}) = \prod_{i,j,k} p_\psi\left(\widehat{y_{ijk}}\middle|c_{ijk}^{st}\right),$$

where $c_{ijk}^{st}$ denotes the spatio-temporal context.

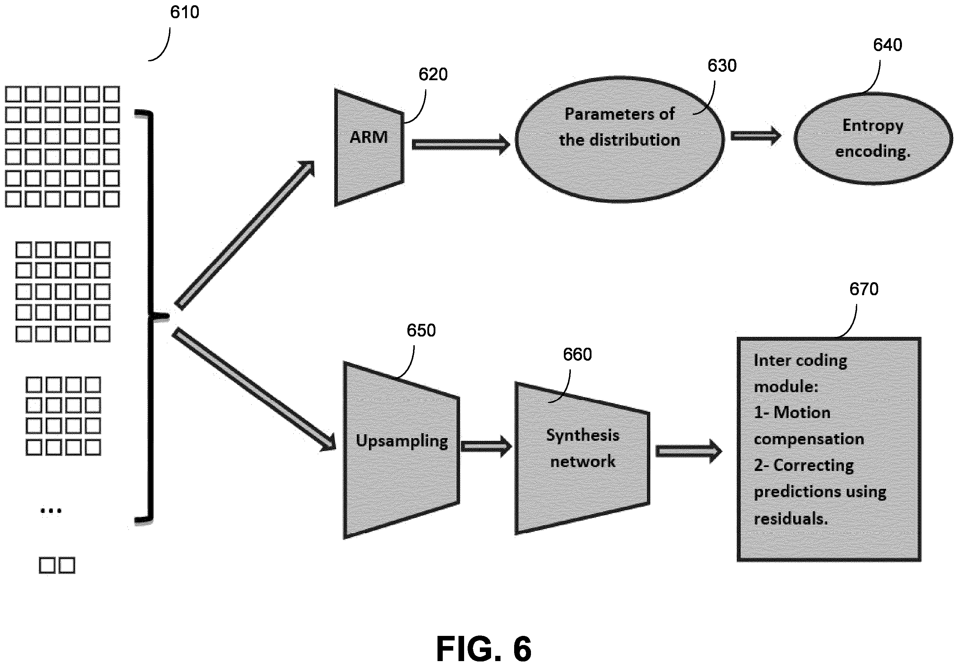

An example of a system such as COOL-CHIC mentioned above is illustrated in FIG. 6. Cool-Chic is a Coordinate-based Low Complexity Hierarchical Image/video codec that proposes an alternative way to encode images and videos with less complexity in comparison with autoencoder-based codecs. It is based on the coordinate-based neural representation where an image is represented as a learned function which maps pixel coordinates to RGB values. This is another kind of hybrid INR as mentioned above. The parameters of the mapping function are sent using entropy coding. At the receiver side, the compressed image is obtained by evaluating the mapping function for all pixel coordinates.

COOL-CHIC supplements a coordinate-based neural representation with a hierarchical latent representation (610), which contains most of the information about the image. To handle the latent representation, COOL-CHIC uses an auto-regressive module (620) estimating the parameters of the latent distribution (630) to compress the latent representation using entropy coding (640).

The variables of the hierarchical latent representation are upsampled (650) and concatenated as a dense 3D representation 2 = upsample(y). In image coding, the RGB value of each pixel $\hat{x}_{ij}$ at coordinates i,j from the compressed image is reconstructed (660) by feeding features determined at i,j of the dense latent representation to the synthesis network. For inter coding, the synthesis module generates (660), for every pixel of the upsampled latent, a set of outputs such as optical flows between reference frames and the current frame, residual and pixel-wise weighting. These outputs are used by the Inter coding module (670) to generate the current frame by motion compensation using already decoded reference frames, weighting the resulting motion compensated predictions, and correcting the resulting prediction with the residual to reconstruct the image at input coordinates.

COOL-CHIC for video compression is built on 2 modules: the COOL-CHIC encoder and the Inter coding module.

The COOL-CHIC encoder is trained to encode a frame by a compressed version composed of 2 neural networks (Auto-regressive probability model, Synthesis model) along with a set of L 2- dimensional learned discrete latent variables (the hierarchical latent representation). In COOL-CHIC, entropy coding relies on the discrete distribution $p_\psi(\hat{y})$ extracted from the learned continuous distribution "g" modeled as a Laplace distribution $g \cong \mathcal{L}(\mu_{ijk}, \sigma_{ijk})$ using integration. The MLP $f_\psi$ learns to estimate the proper expectation and scale parameters $\mu_{ijk}, \sigma_{ijk}$ of that Laplace distribution over the non-quantized latent y, conditioned on the context latents. Such as the probability of latent feature is:

$$p_\psi\left(\widehat{y_{ijk}}\middle|c_{ijk}\right) = \int_{\widehat{y_{ijk}}-0.5}^{\widehat{y_{ijk}}+0.5} g(y)dy, \text{ with } g \cong \mathcal{L}(\mu_{ijk}, \sigma_{ijk}) \quad \text{and} \quad \mu_{ijk}, \sigma_{ijk} = f_\psi\left(c_{ijk}\right)$$

After entropy decoding the latent representations $\hat{y}$, the decoded data is upsampled to highest resolution and concatenated into an L dimension representation, which is given as input to the synthesis module to map the values of all the channels of each pixel with an RGB value in case of image compression. For video compression the output of the synthesis module is a list of tensors representing the input for the inter coding module responsible of the exploitation of motion compensation.

Optical flow

An optical flow is an estimation of the motion between two images, volumes, surface or other signals. It can be estimated by various approaches, including end-to-end training, the Lucas-Kanade Method, solving optical flow equation etc. Given an optical flow o, an input, such as an image x, can be warped to obtain an estimation x' = warp(x, o) of the image after the motion:

$$x'(c_1, c_2) = x(c_1 + o(c_1), c_2 + o(c_2))$$

Such an estimation may involve interpolation.

To generate an estimate of the currently decoded frame from a reference frame, COOL-CHIC uses optical flow in the inter coding module. This use is constrained by the coding configuration used, specifically the type of the frame being encoded: I being intra frames without references (the first frame), P being inter frame with one reference (used in low delay) and B being inter frame with two references (used in random access).

When using two reference frames, the warping predictions obtained from each one of the reference frames are combined:

$$\tilde{x} = \beta \odot \mathsf{warp}(\hat{x}_{\mathsf{ref1}}, v_{\mathsf{ref1}\to t}) + (1 - \beta) \odot \mathsf{warp}(\hat{x}_{\mathsf{ref2}}, v_{\mathsf{ref2}\to t})$$

According to the formula above a pixel-wise continuous weighting $\beta$ is applied to blend the two warpings, yielding the temporal prediction $\tilde{x}$.

As described with FIG. 5, the temporal context used to entropy code the latent is currently made of latent values in a reference frame which are located around the position of the latent value currently being encoded. If there is large movement in the frame, these values may not be very relevant to predict the latent value currently being encoded, leading to suboptimal encoding in terms of bitrate distortion.

Some embodiments provide for improving the entropy coding of the latent values using temporal context from reference frames. In some embodiments, an optical flow or motion information is used to obtain a more relevant context for entropy coding and thus a more efficient encoding.

Embodiments provided herein are described in the case of hybrid INR. However, the embodiments could apply to any latent representation entropy encoding as long as motion information between a current frame and a reference frame can be derived.

In some embodiments, when using temporal context to encode the latent, an optical flow (or movement field) is used to modify the temporal latent of a reference frame to compensate for movement. In the following, an encoding method and a corresponding decoding method for a hybrid-INR system are provided.

An embodiment where the optical flow is obtained from two past reference frames is also described, for example when another optical flow is used to decode that reference frame from another, earlier reference frame, which is typical of low-delay mode. An embodiment where the optical flow is obtained from one future reference frame is also described, when another optical flow is used to decode that reference frame from another past reference frame, which is typical of random-access mode.

In some embodiments, this feature can be switched on/off using signaling in the bitstream.

The latent values used in the hybrid INR system for image or video compression is the costliest in terms of bitrate.

These values typically amount for the majority of the bitstream length. Therefore, using a context that is as informative as possible to predict the latent values is desired.

Embodiments described herein provide for getting an informative context by exploiting optical flows.

In the following described embodiment, it is assumed the optical flow is already available. Two other embodiments describe how to obtain such an optical flow from previously decoded frames.

Without loss of generality, embodiments are described when the signal is a 2D video, but embodiments can apply to any dynamic signal, for example dynamic 3D objects. Furthermore, in the embodiments described, the parameters of the probability distribution model are of an autoregressive model. It should be understood that the probability distribution can be any off-the-shelf probability estimator, for example a conditional Gaussian distribution as in COOL-CHIC, a mixture of Gaussian distributions, or a Naive Bayes model. The parameters of these distributions can be estimated by an autoregressive neural networks or through other means, such as linear regression or decision tree.

In an embodiment, the temporal context from a reference frame is warped to the current frame using motion information, i.e. latent values from a reference frame are warped based on an optical flow to get a better estimate of what those reference values would be like for the current frame and therefore a more informative context.

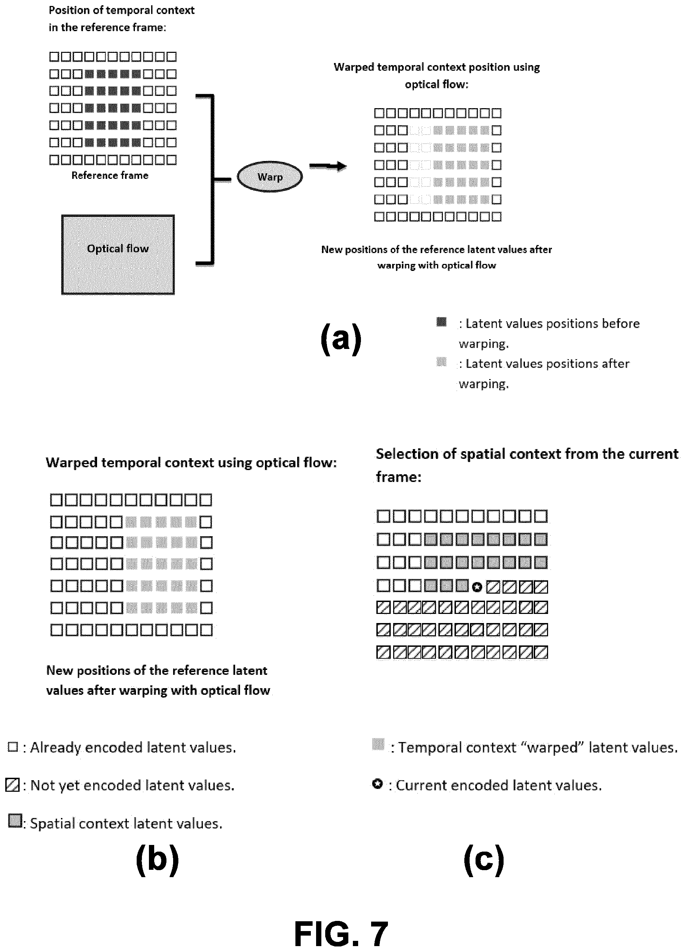

In a variant illustrated in FIG. 7, the position where the values of the temporal context are read in the latent values of the reference frame is warped. In top part of FIG.7(a), the position of the temporal context for a current latent value to decode is warped using an optical flow to obtain new coordinates defining the position, in the space of the latent values, of the temporal context values. FIG. 7(b) displays the position from where the temporal context latents are extracted from the reference latent values when entropy encoding or decoding a current latent value. For simplicity, in the example here, the optical flow is uniform, and all positions are shifted to the right by two steps but typically the flow is not uniform. The temporal context can then be combined with a spatial context (illustrated on FIG. 7(c) and used to predict the distribution of the current latent value of a current frame. According to this variant, only a part of the reference frame is warped to the current frame. This variant can be used for example when the warping of the temporal context can be switched on or off on a pixel wise manner or on region-wise manner. Only the region of the reference frame which correspond to region of the current frame for which warped temporal context is used are warped.

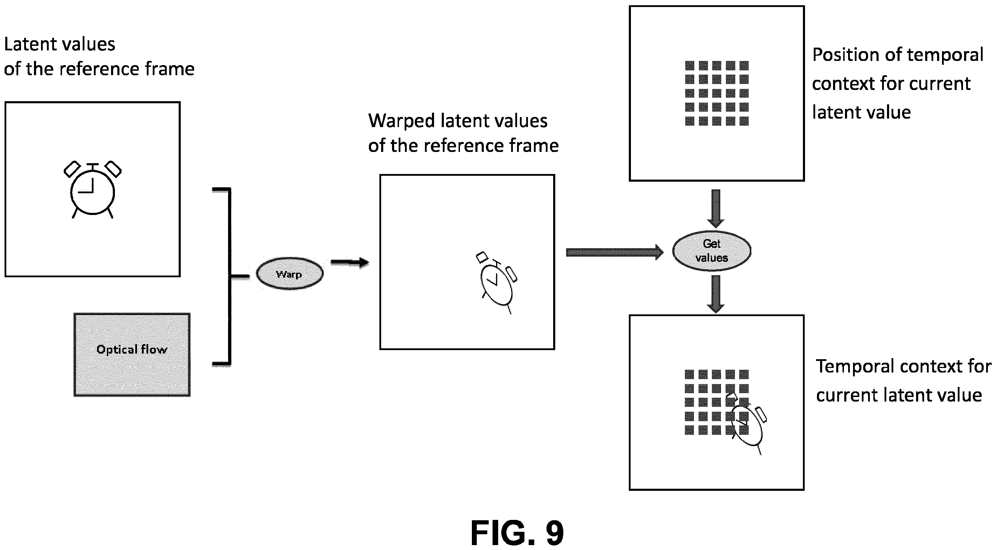

In another variant illustrated in FIG. 9, all the latent values of the reference frame are warped, and the temporal context is obtained from these warped reference latent values. In this variant, all latent values of the reference frame are warped by the optical flow. To obtain the values of the temporal context to predict the distribution of a current latent value to entropy encode or decode, the of the temporal context are read from the warped latent values of the reference frame at the position of this current latent value. For illustration purposes, the latent values of the reference frame are represented by a binary image. It can be seen as representing the position of an edge of a clock. In practice, these latent values may not constitute an image that is meaningful to a human.

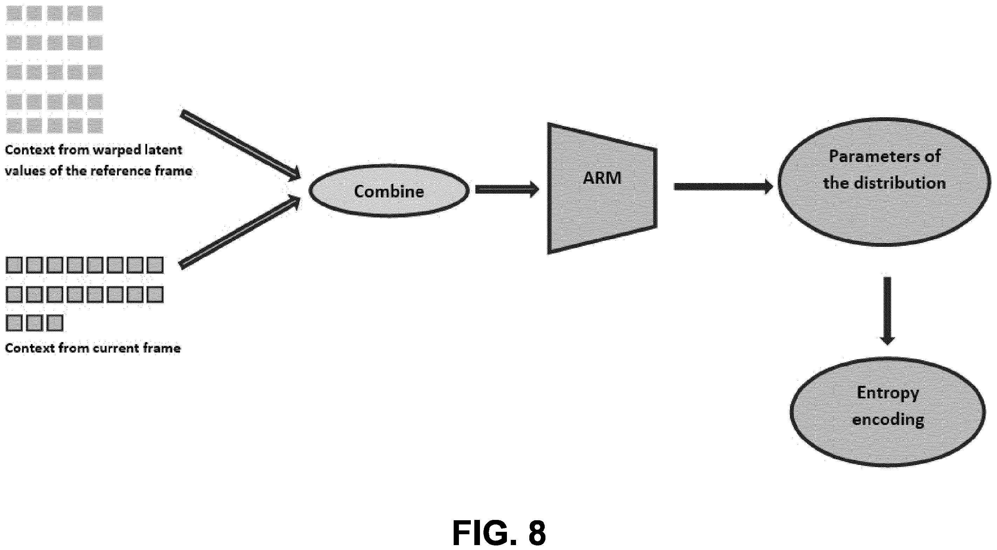

FIG 8 shows the latent value encoding/decoding method when using both a spatial context (from the same frame as the currently encoded value) and a temporal context (from a reference frame). Alternatively, only the temporal context may be used. The method from FIG. 8 is similar to the one illustrated on FIG. 5, except that the temporal context that is used for entropy encoding/decoding a current latent value is a warped temporal context obtained according to one of the variants illustrated with FIG. 7 or FIG. 9.

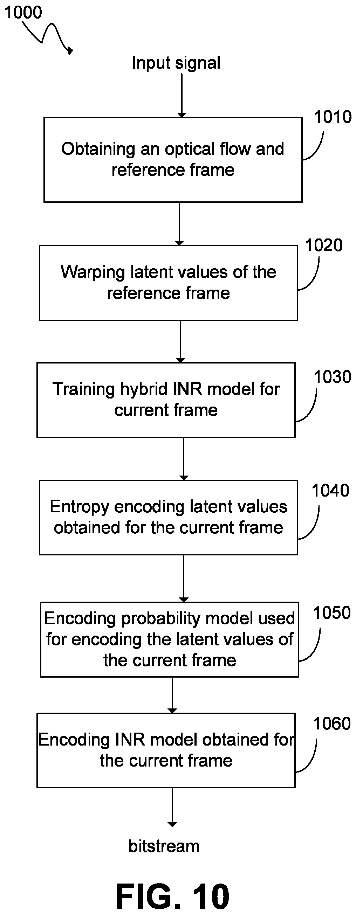

FIG. 10 illustrates an example of a method 1000 for encoding a current frame of an input signal using a hybrid INR encoder, according to an embodiment. At 1010, the encoder obtains an optical flow and a reference frame which is one frame from which the latent values will be used as temporal context. The reference is a frame for which at least the latent values for this frame have been previously reconstructed (encoded and decoded). Also, the optical flow is motion information determined between two frames, for example between the reference frame and another frame previously reconstructed.

At 1020, the latent values of the reference frame are warped by the optical flow to obtain warped temporal latent values. These latent values are located on a grid that is defined over the same space as the pixels of the reference frame. Thus, the optical flow may be applied to them. This may involve upsampling of the reference latent values when the latent representation is a multiresolution representation. This upsampling may for example be done by interpolation function or neural network. Alternatively, if the latent values of the reference frames had been upsampled earlier, for example when decoding the reference frame, those upsampled latent values may be directly warped instead.

At 1030, the Hybrid INR model is trained, using the warped temporal latent values to construct the context used to encode each latent value of the hybrid INR model. Typically, the full hybrid INR model is trained together, including the synthesis network, the latent values and the autoregressive model (or other model) yielding a probability distribution over the latent values. In one variant, only the autoregressive model is trained to encode a set of precomputed latent values. In some variants, training may involve quantization aware training which takes into account quantization of the latent values in the training. The training procedure may also involve steps to account for the coding of the probability model, such as quantization, pruning etc., for example by applying these steps, using additional noise and/or adding specific terms to the loss function such as the rate of the network parameters.

At 1040, the latent values of the current frame are coded by an entropy encoder, based on the discrete probability distribution over the quantized latent features given by the autoregressive model (or another model). This may involve quantization of the latent features if this was not done before. The warped latent values are used to determine the temporal context used for predicting the probability of each latent value of the current frame to entropy encode.

At 1050, the probability model sed for entropy encoding the latent values of the current frame is encoded in a bitstream. If the model involves a neural network, this is typically done by a neural compression codec such as Neural Network Coding (NNC)/ ISO/IEC 15938-17 or MPEG-7 part 17 or simply by quantizing the weights and/or pruning some neurons from the network.

At 1060, the synthesis network is encoded in a bitstream. This is typically done by a neural compression codec such as Neural Network Coding (NNC)/ ISO/IEC 15938-17 or MPEG-7 part 17 or simply by quantizing the weights and/or pruning some neurons from the network. Also, any high-level syntax required to set the decoder is encoded in the bitstream, for example information relating to the mapping functions used to map input coordinates to the latent representation.

In some variants, the optical flow may be optimized jointly with the INR model. This may allow for a more efficient encoding. In that case the optical flow needs to be encoded in the bitstream as well. This may also be done by a neural compression codec such as Neural Network Coding (NNC)/ ISO/IEC 15938-17 or MPEG-7 part 17 or by quantizing the flow. The flow may be encoded by an INR model. Alternatively, a residual with respect to an input optical flow may be optimized and/or encoded in a bitstream. In another variant, the temporal latent values may be optimized jointly with the model, and an optical flow computed based on this optimized temporal latent value and the latent values of the reference frame.

In some variants, warping may involve more than one reference frame. In that case, one or more optical flows may be used. Warping can be done from multiple frames, for example by performing warping individually for each reference frame and then combining the prediction, for example by using a neural network, by doing a weighted average where the weights may be transmitted in the bitstream or computed through other means or by doing interpolation. Another example approach to perform warping from multiple frames is to directly do the warping on multiple frames.

For example, to do warping using a weighted average, the following formula may be used:

$$\tilde{y} = \beta \odot \mathrm{warp}(\hat{y}_{\mathrm{ref1}}, v_{\mathrm{ref1}\rightarrow t}) + (1 - \beta) \odot \mathrm{warp}(\hat{y}_{\mathrm{ref2}}, v_{\mathrm{ref2}\rightarrow t})$$

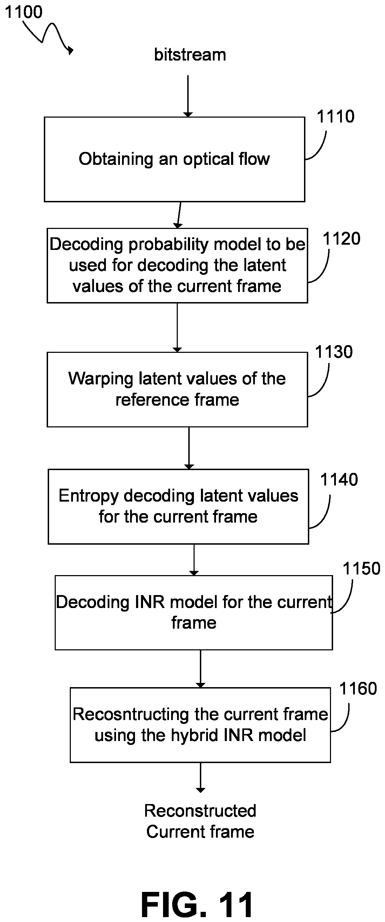

FIG. 11 illustrates an example of a method 1110 for decoding/reconstructing a current frame of a signal from a bitstream according to an embodiment. At 1110, the optical flow is obtained. The optical flow may for example be decoded from the bitstream, obtained from elsewhere or be reused or modified from another frame.

At 1120, the auto-regressive model is obtained. It may for example be decoded from the bitstream.

At 1130, latent values are obtained for at least one already decoded frame: the reference frame. The reference frame is a frame that is available at the decoder, it is a previously reconstructed frame. These latent values are warped using the obtained optical flow to obtain warped reference latent values.

At 1140, latent values of the current frame are then decoded progressively. This may for example be done purely sequentially, or in a wavefront manner. For each latent value, the temporal context for a current latent value to decode is obtained by looking up values of the warped reference latent values. The temporal context may be combined with a spatial context, i.e. already decoded latent values from the current frame. This combination may for example be a concatenation, a sum, an average etc. The obtained context is used as input to the autoregressive model. The autoregressive model outputs the parameters of the distribution over the current latent value to decode. Those parameters are used by the entropy decoder to obtain the current latent value from the bitstream.

In a variant, warping may be done from the latent values of multiple frames rather than one. The most likely case is to perform warping from latent values from one past reference and one future reference frame, as in random access mode.

The decoded latent features can then be used to decode the current frame. At 1150, the synthesis network is obtained. This is typically done by decoding it from the bitstream, but it may already be available to the decoder, for example because it has been used for another part of the signal or is transmitted separately.

At 1160, the current frame is reconstructed using the decoded latent values and the synthesis model (INR model). The decoded features (latent values) may be upsampled. This may require obtaining an upsampling network from the bitstream. The upsampled features are used by the synthesis network to decode the current frame. For 2D images or video, the output of the synthesis network would typically be pixel colors. For 3D scene, the output would typically be color and density of a voxel. For a 3D surface (e.g. hologram), it may be a signed or unsigned distance to the surface.

In a particular variant, the decoded latent features can be used to decode the current frame as in the COOL-CHIC system. In this variant, at 1160, the upsampled features are used by the synthesis network to decode the optical flows, residual and pixels wise weighting. Reconstructing the current frame then comprises motion compensation using already decoded reference frames, weighting the resulting motion compensated prediction, and correcting the obtained result with the residual to generate the current frame.

In an embodiment, the optical flow used in the embodiments described in relation with FIG. 5 and 7-11 is an optical flow from two past reference frames. In this embodiment, the optical flow is obtained from two past reference frames. This embodiment is particularly suited to low-delay modes, where only past frames are available when decoding the current frame.

Given two past frames at times $t$ - 1 and $t$ - 2, where $t$ is the index of the current frame, the optical flow of frame $t$ - 1 with respect to frame $t$ - 2 can be computed by any off-the-shelf approach, including the methods described above. This optical flow can then be used to warp the latent values of frame $t$ - 1 from the frame at $t$ - 1 to the frame at $t$, to encode the latent values of frame $t$, as described above. In this variant, the optical flow can be determined on the decoder side using reconstructed frames at $t$ - 1 and $t$ - 2.

Sometimes, one optical flow may already have been generated between frames $t$ - 1 and $t$ - 2, as part of the decoding of frame $t$ - 1, for example to predict the values of frame $t$ - 1 from these of frame $t$ - 2 and possibly to encode the residual only. This is for example the case in the COOL-CHIC system. In a variant, this optical flow may be used directly to warp the latent values of frame $t$ - 1 to encode the latent values of frame $t$, as described above.

Temporal scaling may be needed in case the reference frames are not equally spaced, for example for past references at times $t$ - $\delta_1$ and $t$ - $\delta_2$, the optical flow may be scaled by $\delta_1/(\delta_2 - \delta_1)$.

In another embodiment, the optical flow used in the embodiments described in relation with FIG. 5 and 7-11 is an optical flow between two reference frames: one past reference frame and one future reference frame. This embodiment is particularly suited to random access modes, where both future and past frames are available when the current frame being decoded is a B-Frame.

Given one past frame at times $t$ - 1 and one future frame at $t$ + 1 (in terms of display order), where $t$ is the index of the current frame, the optical flow of frame $t$ + 1 with respect to frame $t$ - 1 can be computed by any off-the-shelf approach, including the methods described above. This optical flow can then be halved to estimate the optical flow from frame $t$ - 1 to frame $t$. This flow may then be used to warp the latent values of frame $t$ - 1 to encode the latent values of frame $t$, as described above.

In another variant, the optical flow from the latent values of frame $t$ + 1 with respect to the latent values of frame $t$ - 1 can be computed by any off-the-shelf approach, including the methods described above. This optical flow can then be halved to estimate the optical flow from frame $t$ - 1 to frame $t$ and used to warp the latent values of frame $t$ - 1 to encode the latent values of frame $t$, as described above. Both variants may also be combined. Sometimes, one optical flow may already have been generated between frames $t$ + 1 and $t$ - 1, as part of the decoding of frame $t$ + 1, for example to predict the values of frame $t$ + 1 from these of frame $t$ - 1 and possibly to encode the residual only. This is for example the case in the COOL-CHIC system. In a variant, this optical flow may be halved and used directly to warp the latent values of frame $t$ - 1 to encode the latent values of frame $t$, as described above. In all the embodiments above, the optical flow may alternatively be available or computed as the optical flow of frame $t$ + 1 with respect to frame $t$ - 1 .

Any of these two optical flows may also be inverted. For example, the optical flow from the latent values of frame $t$ + 1 with respect to the latent values of frame $t$ - 1 may be inverted to obtain an optical flow from the latent values of frame $t$ - 1 with respect to the latent values of frame $t$ + 1.

When the reference frames are not located at times $t$ - 1 and $t$ + 1 but at times $t$ - $\delta_1$ and $t$ + $\delta_2$, it is possible to create variants of all the above methods. In that case, rather than halving the optical flow, it should be multiplied by a factor depending on $\delta_1$ and $\delta_2$, for example $\delta_1/(\delta_1 + \delta_2)$ for a flow of frame $t$ + $\delta_2$ with respect to frame $t$ - $\delta_1$ and $\delta_2/(\delta_1 + \delta_2)$ for the opposite.

In the embodiments described above, warping is done using optical flow. In other variants, any motion information that allows to perform motion compensation between the reference frame and the current frame can be used.

In an embodiment, the usage of the warped temporal context may be enabled or disabled at a frame level for example. Warping reference latent values may not always lead to a better bitrate distortion tradeoff. This variant allows the encoder to choose whether to use this feature or not for each frame. This must be signaled in the bitstream, for example using an additional bit whose value enables or disabled the use of warped temporal context for latent values of the current frame.

One possible encoding procedure is as follows:

- The current frame is encoded twice: with warped reference latent values and without warping them.
- The encoder chooses one of the encodings: typically, the one with the better rate/distortion trade-off, but other options are possible such as the lowest bitrate.
- The encoder adds one bit in the bitstream signaling whether latent values of the current frame are entropy encoded using warped reference latent values or without using warped reference latent, e.g. 1 for warped reference latent values and 0 without. This bit can be denoted the warped temporal context bit.
- The frame is encoded in the bitstream using the chosen encoding configuration.

In a variant, choosing to warp the temporal feature chosen may be done by a machine learning algorithm or any other heuristic or expert defined algorithm.

In a variant, the choice of the solution is optimized over a group of frames rather than a single one, for example a GOP or a full video. In another variant, the choice is made without encoding the frame using both methods. In that case, the choice may for example be predetermined (e.g. only warp the temporal context for frames number 2,3,5,7,8,9 in a GOP), chosen by a machine learning algorithm or any other heuristic.

The frame can be decoded as follows:

- The decoder reads the warped temporal context bit in the bitstream.
- The decoder selects the appropriate decoding algorithm (with or without warping the temporal context) based on the value of this bit. Using the example given above, if the bit is 1 decoding with warped temporal context is selected and if the bit is 0 decoding without warping them is selected.
- The decoder decodes the frame using the appropriate decoding algorithm.

In a variant, the warped temporal context configuration can be chosen to be identical for multiple frames at the same time, for example for a GOP, for a full video or for a set number of frames. In that case, a single bit is used in the bitstream to signal this choice that affects multiple frames. In a variant, the number of frames for which this choice is valid can be chosen by the encoder and is also included in the bitstream. The encoding/decoding algorithm can easily be adapted for the variants listed above if necessary.

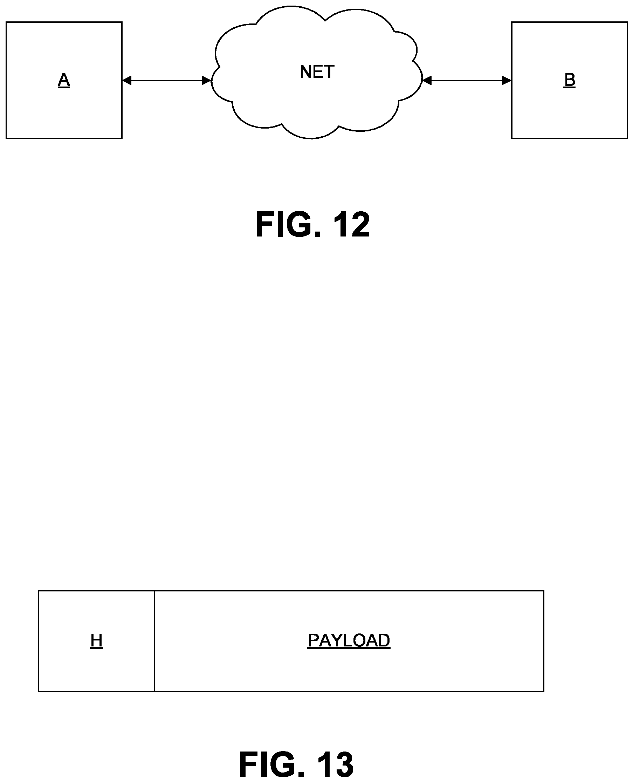

In an embodiment, illustrated in FIG. 12, in a transmission context between two remote devices A and B over a communication network NET, the device A comprises a processor in relation with memory RAM and ROM which are configured to implement a method for encoding a signal according to any one of the embodiments described herein and the device B comprises a processor in relation with memory RAM and ROM which are configured to implement a method for reconstructing the signal according to any one of the embodiments described herein. In accordance with an example, the network is a broadcast network, adapted to broadcast/transmit a coded signal from device A to decoding devices including the device B.

FIG. 13 shows an example of the syntax of a signal transmitted over a packet-based transmission protocol. Each transmitted packet P comprises a header H and a payload PAYLOAD. In some embodiments, the payload PAYLOAD may comprise data representative of an input signal encoded according to any one of the embodiments described above. The payload can also comprise any signaling as described above. For example, the signal comprises the warped temporal context bit mentioned above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding data according to the methods described above.

One or more embodiments provide a computer readable storage medium having stored thereon data generated according to the methods described above. One or more embodiments also provide a method and apparatus for transmitting or receiving data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

The various embodiments described herein provide at least the following features, devices or aspects, alone or on any combination, across various claim categories and types:

i. Encoding, into coded data, syntax elements that can enable the decoder to decode the coded data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image/video or 3D object or 3D scene.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in image, video or immersive standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

> i. session description protocol (SDP), for example as described in RFCs and/or used in conjunction with real-time transport protocol (RTP) transmission.
> ii. hypertext transfer protocol (HTTP) live Streaming (HLS) manifest transmitted over HTTP.
> iii. dynamic adaptive streaming over HTTP (DASH) media presentation description (MPD) descriptors, for example as used in DASH and transmitted over HTTP.
> iv. RTP header extensions, for example as used during RTP streaming.
> v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:

   Obtaining a current latent representative of features of a current frame of an input signal,
   Warping at least one reconstructed part of a reference latent representative of features of a reference frame of the input signal to the current frame,
   Determining a temporal context for at least of one value of the current latent from the warped at least one reconstructed part of the reference latent,
   Entropy encoding the at least one value of the current latent based at least on the temporal context.

2. A method comprising:

   Obtaining at least one part of a warped reference latent from at least one part of at least one previously reconstructed latent representative of features of a previously reconstructed frame of a signal to reconstruct, by warping to a current frame of the signal, the at least one part of the at least one previously reconstructed latent,
   Determining a temporal context for at least of one value of a current latent representative of features of the current frame from the at least one part of the warped reference latent,
   Entropy decoding the at least one value of the current latent based at least on the temporal context.

3. An apparatus, comprising one or more processors, wherein said one or more processors is operable to:

   obtain a current latent representative of features of a current frame of an input signal,
   warp at least one reconstructed part of a reference latent representative of features of a reference frame of the input signal to the current frame,
   determine a temporal context for at least of one value of the current latent from the warped at least one reconstructed part of the reference latent,
   entropy encode the at least one value of the current latent based at least on the temporal context.

4. An apparatus, comprising one or more processors, wherein said one or more processors is operable to:

   obtain at least one part of a warped reference latent from at least one part of at least one previously reconstructed latent representative of features of a previously reconstructed frame of a signal to reconstruct, by warping to a current frame of the signal, the at least one part of the at least one previously reconstructed latent,
   determine a temporal context for at least of one value of a current latent representative of features of the current frame from the at least one part of the warped reference latent, entropy decode the at least one value of the current latent based at least on the temporal context.

5. The method of claim 2, further comprising decoding an Implicit Neural Representation network that reconstructs a value of the current frame at input coordinates from features of the current latent obtained for the input coordinates.

6. The method of claim 2, further comprising decoding a probability model used in the entropy decoding of the at least one latent value.

7. The method of any one of claim 1, 2 or 5-6, wherein warping to the current frame, the at least one part of the at least one previously reconstructed latent uses motion information obtained from two previously reconstructed frames.

8. The method of claim 7, wherein motion information is an optical flow between the two previously reconstructed frames obtained from an output of an Implicit Neural Representation model or decoded from a bitstream.

9. The method of any one of claims 1, 2 or 5-8, wherein obtaining the at least one part of a warped reference latent from at least one part of at least one previously reconstructed latent comprises warping another previously reconstructed latent representative of features of another previously reconstructed frame to the current frame and weighting the warped previously reconstructed latent and the other warped previously reconstructed latent.

10. The method of any one of claims 1, 2 or 5-9, wherein warping to a current frame of the signal, the at least one part of the at least one previously reconstructed latent comprises upsampling at least one part of the at least one previously reconstructed latent.

11. The method of claim 2, further comprising decoding a syntax element indicating whether warping is done or not.

12. The method of any one of claims 2 or 5-11, wherein entropy decoding the at least one value of the current latent is based on a spatial context determined from previously reconstructed values of the current latent.

**FIG. 1**

210                                                                          220

200

# FIG. 2

300                              310

Input signal

Learn INR  parameters        320

Encode INR
parameters                   330

bitstream        350

# FIG. 3

FIG. 4

**Selection of temporal context from the reference frame:**

**Selection of spatial context from the current frame:**

Reference frame

Current frame

□ : Already encoded latent values.

■ : Temporal context latent values.

◪ : Not yet encoded latent values.

○ : Current encoded latent values.

▨ : Spatial context latent values.

Context from reference frame

Context from current frame

510

520

Combine

530

ARM

540

Parameters of the distribution

550

Entropy encoding

# FIG. 5

**FIG. 6**

EP 4 701 188 A1

Position of temporal context
in the reference frame:

Reference frame

Optical flow

Warp

Warped temporal context position using
optical flow:

New positions of the reference latent values after
warping with optical flow

**(a)**

■ : Latent values positions before
warping.

▨ : Latent values positions after
warping.

Warped temporal context using optical flow:

New positions of the reference latent
values after warping with optical flow

□ : Already encoded latent values.

▨ : Not yet encoded latent values.

■ : Spatial context latent values.

**(b)**

Selection of spatial context from the current
frame:

▨ : Temporal context "warped" latent values.

◎ : Current encoded latent values.

**(c)**

# FIG. 7

Context from warped latent
values of the reference frame

Context from current frame

Combine

ARM

Parameters of
the distribution

Entropy
encoding

EP 4 701 188 A1

FIG. 8

Latent values
of the reference frame

Optical flow

Warp

Warped latent values
of the reference frame

Get values

Position of temporal
context for current
latent value

Temporal context for
current latent value

**FIG. 9**

EP 4 701 188 A1

Input signal

Obtaining an optical flow and reference frame — 1010

Warping latent values of the reference frame — 1020

Training hybrid INR model for current frame — 1030

Entropy encoding latent values obtained for the current frame — 1040

Encoding probability model used for encoding the latent values of the current frame — 1050

Encoding INR model obtained for the current frame — 1060

bitstream

1000

**FIG. 10**

1100

bitstream

Obtaining an optical flow — 1110

Decoding probability model to be used for decoding the latent values of the current frame — 1120

Warping latent values of the reference frame — 1130

Entropy decoding latent values for the current frame — 1140

Decoding INR model for the current frame — 1150

Recosntructing the current frame using the hybrid INR model — 1160

Reconstructed Current frame

# FIG. 11

A   ↔   NET   ↔   B

# FIG. 12

| H | PAYLOAD |
|---|---------|

# FIG. 13

Europäisches Patentamt
European Patent Office
Office européen des brevets

# EUROPEAN SEARCH REPORT

**Application Number**

EP 24 30 6385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/006167 A1 (DOLBY LABORATORIES LICENSING CORP [US]) 4 January 2024 (2024-01-04) * paragraph [0032] - paragraph [0062] * ----- | 1-12 | INV. H04N19/503 H04N19/91 G06N3/045 |
| X | XIANG LIU ET AL: "An Efficient Implicit Neural Representation Image Codec Based on Mixed Autoregressive Model for Low-Complexity Decoding", ARXIV.ORG, CORNELL UNIVERSITY LIBRARY, 201 OLIN LIBRARY CORNELL UNIVERSITY ITHACA, NY 14853, 23 January 2024 (2024-01-23), XP091779852, * the whole document * ----- | 1-4 | |
| X | LEGUAY THOMAS ET AL: "Cool-chic video: Learned video coding with 800 parameters", 2024 DATA COMPRESSION CONFERENCE (DCC), IEEE, 19 March 2024 (2024-03-19), pages 23-32, XP034607827, DOI: 10.1109/DCC58796.2024.00010 [retrieved on 2024-05-21] * the whole document * ----- | 1-4 | |
| A | HYUNJIK KIM ET AL: "C3: High-performance and low-complexity neural compression from a single image or video", ARXIV.ORG, CORNELL UNIVERSITY LIBRARY, 201 OLIN LIBRARY CORNELL UNIVERSITY ITHACA, NY 14853, 5 December 2023 (2023-12-05), XP091664794, * the whole document * ----- | 1-12 | |

**TECHNICAL FIELDS SEARCHED (IPC)**

H04N
G06N

The present search report has been drawn up for all claims

| Place of search | Date of completion of the search | Examiner |
|---|---|---|
| Munich | 17 January 2025 | Cyranka, Oliver |

## ANNEX TO THE EUROPEAN SEARCH REPORT
## ON EUROPEAN PATENT APPLICATION NO.

EP 24 30 6385

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | Publication date | Patent family member(s) | Publication date |
|---|---|---|---|
| WO 2024006167 A1 | 04-01-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LADUNE T** ; **PHILIPPE P** ; **HENRY F et al.** Cool-chic: Coordinate-based low complexity hierarchical image codec.. *Proceedings of the IEEE/CVF International Conference on Computer Vision*, 2023, 13515-13522

- Cool-chic video: Learned video coding with 800 parameters. **LEGUAY T** ; **LADUNE T** ; **PHILIPPE P** ; **DÉFORGES O**. 2024 Data Compression Conference (DCC).. IEEE, 2024, 23-32
- **T. MÜLLER** ; **A. EVANS** ; **C. SCHIED** ; **A. KELLER**. Instant Neural Graphics Primitives with a Multiresolution Hash Encoding. *ACM Trans. Graph.*, 04 July 2022, vol. 41